Europäisches Patentamt

European Patent Office

Office européen des brevets

(19)

(11) Veröffentlichungsnummer: **0 289 742 B1**

(12) # EUROPÄISCHE PATENTSCHRIFT

(45) Veröffentlichungstag der Patentschrift: **02.09.92**

(51) Int. Cl.⁵: **G01N 23/207**

(21) Anmeldenummer: **88103810.3**

(22) Anmeldetag: **10.03.88**

(54) **Verfahren zur vertikalen Justierung von Lochblenden im Strahlengang eines Röntgen-Diffraktometers.**

(30) Priorität: **16.03.87 DE 3708505**

(43) Veröffentlichungstag der Anmeldung:
**09.11.88 Patentblatt 88/45**

(45) Bekanntmachung des Hinweises auf die
Patenterteilung:
**02.09.92 Patentblatt 92/36**

(84) Benannte Vertragsstaaten:
**CH DE FR GB IT LI**

(56) Entgegenhaltungen:
**EP-A- 0 183 043**
**AT-B- 335 769**
**DE-A- 3 514 816**

(73) Patentinhaber: **SIEMENS AKTIENGESELL-
SCHAFT**
**Wittelsbacherplatz 2**
**W-8000 München 2(DE)**

(72) Erfinder: **Harm, Bruno, Dr.**
**Bruchwaldstrasse 58**
**W-7500 Karlsruhe(DE)**

Rank Xerox (UK) Business Services

## Beschreibung

Die Erfindung bezieht sich auf ein Verfahren zur vertikalen Justierung von Lochblenden im Strahlengang eines Röntgen-Diffraktometers mit zwei koaxialen Goniometerkreisen mit Präzisionswinkelverstellung, von denen der innere die Halterung für die Probe, der äußere den Detektor trägt, unter Benutzung von vorhandenen, quer zur Strahlrichtung verstellbaren Halterungen für Vertikalspaltblenden. Ein Röntgen-Diffraktometer mit zwei koaxialen Goniometerkreisen ist aus EP-A-0 183 043 bekannt.

Üblicherweise werden Diffraktometersysteme mit Vertikalblenden im Strahlengang verwendet, wobei sich "vertikal" auf die Goniometerebene bezieht.

Für bestimmte Meßaufgaben werden jedoch anstelle der üblichen Vertikalspaltblenden Lochblenden benötigt, deren Blendenöffnungen in vertikaler Richtung auf die konstruktiv vorgegebene Sollhöhe des Strahlengangs über der Goniometerebene zu justieren sind. Skalierte Präzision-Verstelleinrichtungen für die Vertikale sind jedoch relativ aufwendig.

Es besteht demgemäß die Aufgabe, ein Verfahren zur Justierung von Lochblenden im Strahlengang anzugeben, das keiner zusätzlichen Präzisionsverstellvorrichtungen für die Vertikale bedarf.

Die Aufgabe läßt sich mit einem Verfahren der eingangs genannten Art lösen, welches die Merkmale des Anspruchs 1 aufweist.

Es können hierbei Lochblenden mit einfacher, unskalierter Höhenverstellmöglichkeitverwendet werden, um unter Benutzung der dem Detektor vorgeschalteten Diagonalspaltblende und der Präzisionswinkelverstellung des äußeren Goniometerkreises die Lochblenden eines ganzen Blendensatzes auf die vorgegebene Sollhöhe des Strahlengangs einzustellen. Einstellkriterium ist jeweils das Maximum des Detektorausgangssignals.

Das Justierverfahren wird anhand der in Figur 1 schematisch dargestellten Diffraktometereinrichtung im folgenden erläutert. Die Figuren 2 und 3 zeigen Ausführungsbeispiele von Diagonalspalt- und vertikal verstellbaren Lochblenden.

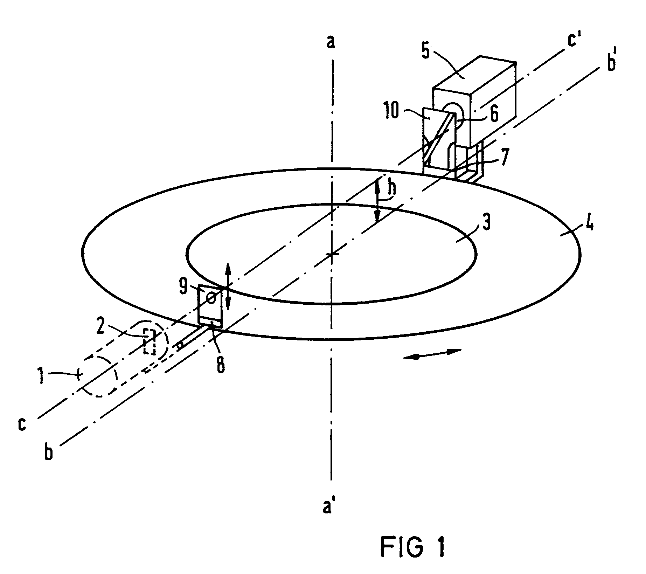

Die in Figur 1 schematisch dargestellte Diffraktometeranordnung besteht im wesentlichen aus der angedeuteten Röntgenröhre 1 mit dem Brennfleck 2, einem inneren Goniometerkreis 3, in dessen Mittelpunkt sich üblicherweise die hier nicht gezeichnete Probenhalterung befindet, und einem äußeren Goniometerkreis 4, mit Hilfe dessen der Detektor 5 mittels eines Präzisionsgetriebes um die den Goniometerkreisen gemeinsame Achse a-a' schwenkbar ist. Vor der Eintrittsöffnung 6 des Detektors 5 ist eine Halterung 7 zum Einstecken einer Blende, im weiteren Detektorblende genannt, vorgesehen.

Zwischen Röntgenröhre 1 und Detektor 5 ist mindestens eine Halterung 8 für eine einsteckbare Blende vorgesehen, die parallel zur Goniometerebene verstellbar ist.

Als erster Verfahrensschritt zur Blendenjustierung wird in an sich bekannter Weise Brennfleck 2 der Röntgenröhre 1 und Detektor 5 auf die 0°-Richtung der Goniometerkreise 3 und 4 durch Abgleich auf Maximum des Detektorausgangssignals ausgerichtet. Dabei ist in der Halterung 7 als Detektorblende eine enge Vertikalspaltblende eingesetzt, beispielsweise mit einem Öffnungswinkel von 0,15°, bezogen auf den Abstand Goniometerachse a-a' und Blendenebene der Detektorblende. Als nächster Schritt wird in die Blendenhalterung 8 vor der Röntgenröhre 1 eine Lochblende 9 eingesetzt, deren Blendenmittelachse grob auf die konstruktiv und mechanisch vorgegebene Sollhöhe h des parallel zur 0°-Ausrichtung b-b' verlaufenden Strahlengangs c-c' durch die Mitte des Brennflecks 2 und die Mitte der Eintrittsöffnung 6 des Detektors 5 justiert ist. Die richtige Lage der Lochblende 9 in einer Richtung quer zur 0°-Linie b-b' wird durch Maximumabgleich mit dem Detektor überprüft und erforderlichenfalls durch Horizontalverstellung der Blendenhalterung 8 korrigiert.

Anstelle der Vertikalspaltblende wird nun eine Diagonalspaltblende 10 als Detektorblende in die Halterung 7 eingesetzt. Durch eine Winkelverstellung des äußeren Goniometerkreises 4 wird auf maximales Ausgangssignal des Detektors 5 abgeglichen. Aus der so gewonnenen präzisen Winkeleinstellung des äußeren Goniometerkreises 4 ist Betrag und Richtung der Abweichung des von der Lochblende 9 begrenzten Strahls von der Sollhöhe h leicht feststellbar.

Bei der bevorzugten Verwendung einer Diagonalspaltblende 10, deren Spalt unter einem Winkel von 45° verläuft, kann die Bogenlänge des von der 0°-Richtung des Goniometerkreises abweichenden Bogenwinkels aufgrund der Grobjustierung der Lochblende 9 als die Differenz der Isthöhe des Strahlengangs zur Sollhöhe angesehen werden. Mittels einer einfachen vertikalen Verstellmöglichkeit der Lochblende 9 läßt sich iterativ durch wiederholten Abgleich des Detektorausgangssignals auf Maximum, die Mittelachse der Lochblende 9 auf die Sollhöhe h und der Detektor wieder auf die 0°-Linie b-b' des Goniometerkreises bringen.

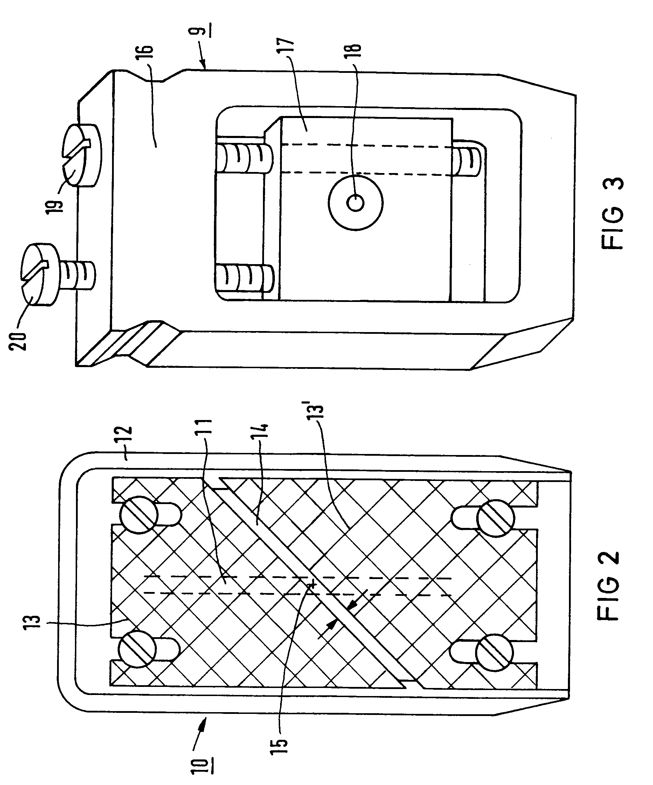

Figur 2 zeigt ein Ausführungsbeispiel einer Diagonalspaltblende 10. Sie besteht aus einem in die Blendenhalterung 7 der Detektorblende anstelle der gestrichelt angedeuteten Vertikalspaltblende 11 formschlüssig einsteckbaren Rahmen 12, auf dem zwei in Vertikalrichtung gegeneinander verstellbare trapezförmige Platten 13 und 13' angebracht sind, deren einander gegenüberliegende, unter einem Winkel von etwa 45° parallel verlaufende Kanten den Diagonalspalt 14 begrenzen. Der vorgesehene Durchstoßpunkt 15 des Strahlengangs in der Sollhöhe h liegt etwa in der Mitte des Blendenspalts 14, der eine Blendenweite in der Größenordnung von 1 mm aufweist.

Figur 3 zeigt ein Ausführungsbeispiel einer Lochblende 9. Sie besteht im wesentlichen aus einem in eine Blendenhalterung 8 kraft- und formschlüssig einsteckbaren Rahmen 16, dessen parallele vertikale Innenflächen als Führung für einen quaderförmigen Blendenträger 17 dienen, in welchem die kreisrunde Blendenöffnung 18 mit einem Durchmesser in der Größenordnung von 0,1 mm angeordnet ist.

In dem Blendenträger 17 ist ein durchgehendes Gewinde für eine Zugschraube 19 angebracht, die im Rahmen 16 gehaltert ist und mit der der Blendenträger 17 in Vertikalrichtung auf und ab bewegt werden kann. Zur Festlegung einer bestimmten erreichten Stellung des Blendenträgers 17 und damit der Blendenöffnung 18 dient eine ebenfalls im Blendenrahmen 16 gehalterte Druckschraube 20, die sich auf die obere Horizontalfläche des Blendenträgers 17 abstützt.

**Patentansprüche**

1. Verfahren zur vertikalen Justierung von Lochblenden (9) im Strahlengang eines Röntgen-Diffraktometers mit zwei koaxialen Goniometerkreisen (3, 4), von denen der innere (3) die Halterung für die Probe, der äußere (4) den Detektor trägt, **gekennzeichnet durch** folgende Schritte:
   a) Ausrichten von Brennfleck (2) und Detektor (5) mit vorgesetzter Detektorblende in Form einer engen Vertikalblende (11) in der Blendenhalterung (7) auf die 0°-Richtung der Goniometerkreise (3, 4) durch Abgleich auf Maximum des Detektorausgangssignals;
   b) Einsetzen einer vertikal verstellbaren, grob auf etwa die konstruktiv vorgegebene Sollhöhe (h) des Strahlengangs (c-c') eingestellte Lochblende (9) in eine Blendenfassung (8);
   c) Horizontalabgleich der in die Blendenhalterung (8) eingesteckten Lochblende (9) durch Verstellung der Blendenhalterung (7) quer zur Richtung des Strahlengangs (c-c'), bis ein Maximum des Detektorausgangssignals erreicht ist;
   d) Einsetzen einer Diagonalspaltblende (10) anstelle der Vertikalspaltblende (11) in die Halterung (7) für die Detektorblende;
   e) Abgleich auf Maximum des Detektorausgangssignals durch Winkeldrehung des äußeren Goniometerkreises (4);

   f) Bestimmung der Isthöhe und des von der Lochblende (9) begrenzten Strahls aus der horizontalen Winkelabweichung des äußeren Goniometerkreises (4);
   g) vertikale Verstellung der Lochblende 9 in Richtung auf die Sollhöhe h und unter Rückstellung des Detektors (5) mit vorgesetzter Diagonalspaltblende (10) auf die 0°-Richtung (b-b') mittels iterativem Maximumabgleich des Detektorausgangssignals.

2. Diagonalspaltblende zur Verwendung in dem Verfahren nach Anspruch 1, **gekennzeichnet durch** einen in die Blendenhalterung (7) der Detektorblende formschlüssig steckbaren Rahmen (12), auf dem zwei in Vertikalrichtung gegeneinander verstellbare trapezförmige Platten (13, 13') angebracht sind, deren einander gegenüberliegende, unter einem Winkel von etwa 45° und parallel verlaufende Kanten den Diagonalspalt (14) begrenzen.

3. Diagonalspaltblende nach Anspruch 2, **dadurch gekennzeichnet,** daß die Spaltweite des Diagonalspalts (14) in der Größenordnung von 1 mm liegt.

4. Lochblende zur Verwendung in dem Verfahren nach Anspruch 1, **gekennzeichnet durch** einen in eine Blendenhalterung (8) im Strahlengang kraft- und formschlüssig einsteckbaren Rahmen (16), dessen parallele vertikale Innenflächen als Führung für einen mittels Zug- und Druckschrauben (19, 20) senkrecht verschieb- und feststellbaren Blendenträger (17) mit zentrisch angeordneter Blendenöffnung (18) wirken.

**Claims**

1. Method for the vertical adjustment of aperture plates (9) in the beam path of an X-ray diffractometer with two coaxial goniometer circuits (3,4), the inner one (3) of which carries the holder for the sample, the outer one (4) the detector, characterized by the following steps:
   a) alignment of focussed spot (2) and detector (5) with a preset detector diaphragm in the form of a narrow vertical diaphragm (11) in the diaphragm holder (7) to the 0°-direction of the goniometer circuits (3, 4) through adjustment to the maximum of the detector output signal;
   b) insertion of a vertically adjustable aperture plate (9) into a diaphragm mounting (8), set approximately to the constructionally specified desired height (h) of the beam path (c-c');

c) horizontal adjustment of the aperture plate (9) inserted into the diaphragm holder (8) through displacement of the diaphragm holder (7) at right angles to the direction of the beam path (c-c'), until a maximum of the detector output signal is achieved;

d) insertion of a diagonal gap diaphragm (10) in place of the vertical gap diaphragm (11) into the holder (7) for the detector diaphragm;

e) adjustment to the maximum of the detector output signal through angular rotation of the outer goniometer circuit (4);

f) determination of the actual height and of the beam limited by the aperture plate (9) from the horizontal angle deviation of the outer goniometer circuit (4);

g) vertical displacement of the aperture plate 9 in the direction of the desired height h and with the resetting of the detector (5) with preset diagonal gap diaphragm (10) to the 0°-direction (b-b') by means of iterative maximum adjustment of the detector output signal.

2. Diagonal gap diaphragm for use in the method according to claim 1, characterized by a frame (12) which can be inserted into the diaphragm holder (7) of the detector diaphragm in a form-locking manner, on which two trapezoidal plates (13, 13') which can be displaced relative to one another in the vertical direction are fitted, the edges of which, opposing one another and extending in parallel and under an angle of approximately 45°, limit the diagonal gap (14).

3. Diagonal gap diaphragm according to claim 2, characterized in that the gap width of the diagonal gap (14) lies in the order of magnitude of 1 mm.

4. Aperture plate for use in the method according to claim 1, characterized by a frame (16) which can be inserted in a force-locking and form-locking manner into a diaphragm holder (8) in the beam path, the parallel vertical inner faces of the frame acting as a guide for a diaphragm carrier (17), which can be vertically displaced and fixed into position by means of pushing and pulling screws (19, 20), with a centrally arranged diaphragm opening (18).

**Revendications**

1. Procédé pour ajuster verticalement des diaphragmes (9) dans le trajet du rayonnement d'un diffractomètre à rayons X comportant deux cercles goniométriques coaxiaux (3,4), dont l'intérieur (3) porte le support pour l'échantillon et dont l'extérieur (4) porte le détecteur, caractérisé par les étapes suivantes :

a) alignement du foyer (2) et du détecteur (5) avec un diaphragme de détection intercalé, réalisé sous la forme d'un diaphragme vertical étroit (11) situé dans le porte-diaphragme (7), dans la direction 0° des cercles (3,4) des goniomètres, par accord sur le maximum du signal de sortie du détecteur;

b) insertion d'un diaphragme (9) réglable verticalement, qui est réglé en gros approximativement sur la hauteur de consigne (h), prédéterminée par construction, du trajet du rayonnement (c-c'), dans une monture de diaphragme (8);

c) réglage horizontal du diaphragme (9) inséré dans la monture de diaphragme (8), par déplacement du porte-diaphragme (7) transversalement par rapport à la direction du trajet du rayonnement (c-c'), jusqu'à ce qu'un maximum du signal de sortie du détecteur soit atteint;

d) utilisation d'un diaphragme à fente diagonale (10) à la place du diaphragme à fente verticale (11) dans le support (7) du diaphragme du détecteur;

e) réglage d'accord sur le maximum du signal de sortie du détecteur au moyen d'une rotation angulaire du cercle extérieur (4) du goniomètre;

f) détermination de la hauteur réelle et du faisceau, délimité par le diaphragme (9), à partir de l'écart angulaire horizontal du cercle extérieur (4) du goniomètre;

g) déplacement vertical du diaphragme (9) dans la direction de la hauteur de consigne h et retour du détecteur (5) dans lequel est monté le diaphragme à fente diagonale (10), dans la direction 0° (b-b') moyennant un réglage d'accord itératif du maximum du signal de sortie du détecteur.

2. Diaphragme à fente diagonale destinée à être utilisé dans le procédé selon la revendication 1, caractérisé par un cadre (12), qui peut être enfiché selon une liaison par formes complémentaires dans le porte-diaphragme (7) du diaphragme du détecteur et sur lequel sont montées deux plaques trapézoïdales (13,13'), qui sont déplaçables l'une par rapport à l'autre dans la direction verticale et dont les bords parallèles, réciproquement opposés, qui font un angle d'environ 45°, délimitent la fente diagonale (14).

3. Diaphragme à fente diagonale suivant la revendication 2, caractérisé par le fait que la largeur de la fente diagonale (14) est de l'ordre de 1 mm.

4. Diaphragme destiné à être utilisé dans le procédé selon la revendication 1, caractérisé par un cadre (16), qui peut être enfiché selon une liaison de force et selon une liaison par formes complémentaires dans un porte-diaphragme (8) dans le trajet du rayonnement et dont les surfaces intérieures verticales parallèles agissent en tant que guide pour un porte-diaphragme (17) qui peut être déplacé et fixé perpendiculairement au moyen de vis de traction et de compression (19,20) et comporte un diaphragme dont l'ouverture (18) est centrée.

FIG 1

FIG 2

FIG 3

EP 0 289 742 B1